Europäisches Patentamt

European Patent Office

Office européen des brevets

(19)

(11) Veröffentlichungsnummer: **0 002 536**
**B1**

(12) **EUROPÄISCHE PATENTSCHRIFT**

(21) Anmeldenummer: **78101713.2**

(22) Anmeldetag: **15.12.78**

(51) Int. Cl.³: **C 04 B 5/00, C 01 B 33/24, C 03 C 1/02, C 04 B 13/10, C 04 B 31/10, C 09 K 17/00**

(54) Verfahren zur raffinierenden Aufbereitung von Phosphorofenschlacke und Verwendung des dabei erhaltenen Materials

(30) Priorität: **20.12.77 AT 9131/77**

(43) Veröffentlichungstag der Anmeldung: **27.06.79 Patentblatt 79/13**

(45) Bekanntmachung des Hinweises auf die Patenterteilung: **07.01.81 Patentblatt 81/01**

(84) Benannte Vertragsstaaten: **BE CH DE FR GB IT LU NL SE**

(56) Entgegenhaltungen:
DE - A - 1 792 551
DE - A - 2 435 043
DE - B - 1 804 172
FR - A - 2 132 758
FR - A - 2 239 423

(73) Patentinhaber: **Wessel-Werk GmbH**
**Siemensstrasse 6 - 12**
**D - 5300 Bonn 1 (DE)**

(72) Erfinder: **Kerstan, Walter**
**Robert-Koch-Strasse 9**
**D - 5300 Bonn (DE)**

(74) Vertreter: **von Kreisler, Alek, Dipl.-Chem, et al**
**Deichmannhaus am Hauptbahnhof**
**D - 5000 Köln 1 (DE)**

Verfahren zur raffinierenden Aufbereitung von Phosphorofenschlacke und Verwendung des dabei erhaltenen Materials

Die Erfindung betrifft ein Verfahren zur Aufbereitung der bei der thermischen Phosphorgewinnung aus Rohphosphaten anfallenden silikatischen Schlackenphase und die Verwendung des dabei anfallenden gereinigten Materials. Die Erfindung ist insbesondere zur raffinierenden Aufarbeitung des glasigen Schlackensandes geeignet, der in bekannter Weise beim Abschrecken der abgestochenen Phosphorschlackenschmelze in Wasser anfällt und bis heute keiner wirklich brauchbaren Verwendung zugeführt werden konnte.

In der DE—AS 18 04 172 wird ein Verfahren zur Herstellung von synthetischem Wollastonit beschrieben, bei dem granulierte glasige Phosphorofenschlacke bei 1.000°C bis 1.100°C eine Stunde getempert wird. Die so behandelte Schlacke zeigt unregelmäßige Kristallaggregate auf und wurde als $\beta$-Wollastonit identifiziert. Dieser Wollastonit soll als Kalkrohstoff in keramischen Massen Verwendung finden. Dadurch soll es möglich sein, Verbesserungen hinsichtlich der Feuchtedehnung, des Dehnungs- und Schwindungsverhalten und der Dichte zu erzielen.

Das nach dem Verfahren dieser Auslegeschrift anfallende Produkt ist ein opakes grau-schwarzes Material, das von feinen schwarzen Partikeln durchsetzt ist. Hierbei handelt es sich teilweise um verschlackten Reductionskoks aus der Apatitumsetzung zur Phosphorgewinnung, vor allem aber auch um schwarzen Ferrophosphor. Stellt man unter Mitverwendung dieses Materials keramische Massen her, die beispielsweise aus 50% der feingemahlenen getemperten Schlacke und 50% tonigen Substanzen besteht, so entsteht eine sogenannte mondige Platte, d.h. ein Produkt mit dunklen Verfärbungen. Ein einwandfreies keramisches Produkt ist auf diese Weise nicht herzustellen. Das geschilderte Verfahren zur Aufbereitung der Phosphorrohschlacke hat tatsächlich auch bis heute keinen Eingang in die Praxis gefunden.

In der DE—AS 22 11 505 wird ein Verfahren zur Aufbereitung der bei der thermischen Phosphorgewinnung aus Rohphosphat anfallenden silikatischen Schlackenphase, welche in Wasser abgeschreckt und granuliert wird, geschildert, bei dem der in Wasser selektiv granulierende Ferrophosphor aus dem Granulat aussortiert wird. Das Sortieren erfolgt insbesondere durch physikalische Trennung, beispielsweise durch Schweretrennung mit Tetrabromäthan als Flüssigphase. Auf diese Weise soll die silikatische Rohschlackenphase aus der Phosphorgewinnung, die eine unansehnliche Graufärbung besitzt und bislang im wesentlichen als Abfallprodukt auf Halden deponiert oder als billiges Füllmaterial im Tiefbau verwertet wurde, in ein veredeltes Produkt umgewandelt werden, das sich zur Herstellung von Wollastonit-Material und zur Herstellung von Baustoffen eignet.

In der DE—OS 24 35 043 wird darüberhinausgehend vorgeschlagen, das durch Aussortieren des Ferrophosphors aus der granulierten silikatischen Schlackenphase erhaltene Material als Glasrohstoff einzusetzen.

Ausführliche Untersuchungen zur Herstellung von synthetischem Wollastonit aus Quarz und Calciumverbindungen durch einen Glühprozeß oder nach hydrothermaler Vorbehandlung und anschließenden Glühprozeß sind in der Veröffentlichung A. Solf und W. Ohnemüller "Darstellung von synthetischem Wollastonit aus Calciumhydrosilikaten", Tonindustrie-Zeitung 94 (1970), Nr. 5, Seiten 197—214, beschrieben. Das nach diesem Verfahren hergestellte Wollastonit-Material ist derzeit aus Kostengründen nicht einsatzfähig.

Der Erfindung hat sich die Aufgabe gestellt, die als billiges Abfallmaterial anfallende silikatische Rohschlacke aus der thermischen Phosphorgewinnung und insbesondere das durch Abschrecken in Wasser anfallende glasige Schlackengranulat in einfacher und gegenüber den bisherigen Vorschlägen verbesserter Weise zu einem hochwertigen Calciumsilikat enthaltenden Material umzuwandeln, das in vielfältigster Weise Verwendung finden kann.

Die Lösung dieser erfindungsgemäßen Aufgabe geht von der Feststellung aus, daß eine hydrothermale Behandlung der silikatischen Phosphorrohschlacke in der Feststoffphase bei Temperaturen über 600°C zu einer überraschend intensiven Reinigung der Schlacke führt. Insbesondere gelingt es auf diese Weise, die störende Ferrophosphorverunreinigung zu beseitigen. Das Eisen reichert sich statt dessen in einer gewünschtenfalls leicht abtrennbaren getrennten Phase vermutlich in Form von Calcium-Eisenverbindungen an. Bei Verfahrenstemperatur gasförmige Reaktionsprodukte, wie Wasserstoff und Schwefelwasserstoff, blähen gleichzeitig die silikatische Schlackenphase zu einem porösen Produkt auf, das interessante Anwendungen ermöglicht.

Gegenstand der Erfindung ist dementsprechend in einer ersten Ausführungsform ein Verfahren zur raffinierenden Aufbereitung der bei der thermischen Phosphorgewinnung aus Phosphaten anfallenden silikatischen Schlackenphase, das dadurch gekennzeichnet ist, daß man die Schlacke als feinkörnigen Feststoff bei Temperaturen über 600°C mit Wasserdampf behandelt. Diese hydrothermale Behandlung erfolgt im Temperaturbereich unterhalb der Erweichungstemperatur des behandelten feinkörnigen Materials. Besonders geeignet ist der Temperaturbereich bis etwa 1.000°C, vorzugsweise von etwa 650 bis 1.000°C, insbesondere der Bereich von etwa 750° bis 900°C.

Im erfindungsgemäßen Verfahren wird bevorzugt, die körnige Rohschlacke einzusetzen, die beispielsweise beim Abschrecken der silikatischen Schlackenphase aus der reduktiven Phosphorgewinnung in Wasser unter gleichzeitigem Granulieren anfällt. Es kann zweckmäßig sein, diese granulierte Rohschlacke zunächst durch Sieben von Grobverunreinigungen zu befreien, die in der Regel aus Koks bestehen, der mit Phosphorschlacke infiltriert ist. Gewünschtenfalls kann die als Ausgangsmaterial eingesetzte körnige Rohschlacke zunächst durch Sieben vorbehandelt werden, wobei beispielsweise das durch ein Sieb mit einer Maschenweite von ca. 5 mm, vorzugsweise von ca. 2 mm hindurchgehende Gut in das erfindungsgemäße Verfahren eingesetzt wird.

Im erfindungsgemäßen Verfahren wird zweckmäßigerweise die als feinkörniges Gut eingesetzte Rohschlacke bei Verfahrenstemperatur bewegt. z.B. umgewälzt, und dabei mit strömendem Wasserdampf behandelt, wobei diese Behandlung so lange fortgesetzt wird, bis die störenden Verunreinigungen, insebesondere der Ferrophosphor, beseitigt sind. Zur Durchführung des erfindungsgemäßen Verfahrens ist beispielsweise die Behandlung des körnigen Ausgangsgutes in einem mit Wasserdampf durchströmten und auf Verfahrenstemperatur beheizten Drehrohr geeignet. Das Einsatzgut kann auch im nassen Zustand eingeführt werden. Die Verfahrensdauer kann im Bereich von einigen Minuten bis einigen Stunden — z.B. etwa 15 Min. bis 5 Stunden — liegen und beträgt in der Regel etwa 20 Min. bis 1 1/2 Stunden. Eine weitere Möglichkeit ist die Behandlung des Schlackengranulates in einem Schachtofen, der zweckmäßigerweise von unten nach oben mit Wasserdampf durchströmt ist, wobei das Schlackengranulat oben eingespeist wird und dem Wasserdampf entgegen zweckmäßigerweise über Prallflächen umgelenkt nach unten fällt.

Die im erfindungsgemäßen Verfahren raffinierte Schlacke fällt als poröses geblähtes Produkt an, das gegenüber dem Ausgangsmaterial eine verringerte Dichte besitzt. Dabei kann insbesondere durch Wahl der jeweiligen Arbeitstemperatur Einfluß auf die jeweilige Dichte des Verfahrensproduktes genommen werden. Es gilt hier die Regel, daß das Schüttgewicht um so geringer wird — d.h. der Blähungszustand um so stärker ausgebildet ist — je höher unter sonst gleichbleibenden Verfahrensbedingungen die eingesetzte Verfahrenstemperatur gewählt wird. Erfindungsgemäß ist es dabei möglich, Schüttdichten im Verfahrensprodukt unter 1 g/cm$^3$, vorzugsweise unter 0,7 g/cm$^3$, einzustellen. Wird bei ausreichend hohen Temperaturen, beispielsweise oberhalb 800°C, gearbeitet, dann können Schüttgewichte bzw. Dichten auch unter 0,5 g/cm$^3$ eingestellt werden. Das Verfahren wird üblicherweise im Bereich des Normaldrucks durchgeführt.

Das erfindungsgemäße Verfahren führt zu einer Entfärbung der eingesetzten Rohschlacke. Das silikatreiche Material fällt dabei als frittenartiger Blähkörper an, in dem sich unmagnetische dunkle Körner von dichter Struktur finden. Diese dunklen Verunreinigungen können gewünschtenfalls leicht von dem raffinierten Schlackenprodukt abgetrennt werden. Das kann durch eine physikalische Nachreinigung erfolgen. Beispielsweise läßt sich das geblähte silikatische frittenartige Material sehr viel leichter brechen als die körnigen dunklen Verunreinigungen, so daß man durch einen anschließenden Siebvorgang die nicht gebrochenen Kornverunreinigungen abtrennen kann. Erstaunlicherweise hat sich allerdings gezeigt, daß beispielsweise zur Herstellung hochwertiger keramischer Massen eine solche Abtrennung dieser nach der erfindungsgemäßen Raffination vorliegenden Verunreinigungen nicht einmal notwendig ist.

Als silikatische Rohschlacke eignen sich die in kommerziellen Verfahren zur Phosphorgewinnung aus Rohphosphaten, insbesondere aus Fluorapatit anfallenden Schlacken. Insbesondere kann es sich dabei um Silikatschlacken handeln, die von der Hauptmenge des als zweite Schmelzphase gebildeten Ferrophosphors befreit sind, jedoch noch beträchtliche Verunreinigungen an Ferrophosphor enthalten. Angaben zur Zusammensetzung solcher Rohschlackenausgangsmaterialien finden sich beispielsweise in den genannten DE—ASen 18 04 172 und 22 11 505. Die spezielle Zusammensetzung schwankt dabei in verhältnismäßig engen Grenzen in Abhängigkeit vom Rohmaterial für die Phosphorgewinnung. Geeignet können beispielsweise Phosphorofenschlacken der chemischen Zusammensetzung von

| | |
|---|---|
| SiO$_2$ | 44 bis 48 Gew.-% |
| CaO | 42 bis 46 Gew.-% |
| Al$_2$O$_3$ | 2 bis 5 Gew.-% |
| Na$_2$O/K$_2$O | 1 bis 3 Gew.-% |
| F$_2$ | 1 bis 3 Gew.-% |

sein.

Eine als Ausgangsmaterial für das erfindungsgemäße Verfahren besonders geeignete Rohschlacke kann die folgende chemische Zusammensetzung aufweisen.

| | | | | |
|---|---|---|---|---|
| SiO$_2$ | 42 | bis | 49 | Gew.-% |
| Al$_2$O$_3$ | 0,7 | bis | 5 | Gew.-%, insbesondere |
| | 0,7 | bis | 3 | Gew.-% |
| Fe$_2$O$_3$ | 0,1 | bis | 0,3 | Gew.-% |
| TiO$_2$ | 0 | bis | 1 | Gew.-%, insbesondere |
| Na$_2$O | 0,4 | bis | 0,6 | Gew.-% |
| K$_2$O | 0,2 | bis | 0,3 | Gew.-% |
| CaO | 42,0 | bis | 48 | Gew.-% |
| MgO | 0,2 | bis | 0,3 | Gew.-% |
| F | 1 | bis | 3,5 | Gew.-%, insbesondere |
| | 2,5 | bis | 3 | Gew.-% |
| S | 0,2 | bis | 0,4 | Gew.-% |
| P$_2$O$_5$ | 1,0 | bis | 1,5 | Gew.-% |

Bei diesen Zahlenwerten handelt es sich um die Analysenwerte des ausgeglühten Materials, das nach einem Glühverlust von 3 bis 8% entstanden ist.

Behandelt man eine solche — im praktischen Verfahren natürlich nicht vorher ausgeglühte — Rohschlacke als feinteiligen Feststoff mit Wasserdampf bei Temperaturen oberhalb 600°C, jedoch unterhalb der Temperaturen, bei denen eine wesentliche Verklebung der Feststoffteilchen stattfindet, so entsteht ein poröses granuliertes Produkt, in dem Wollastonit und Cuspidin (Ca$_2$F$_2$Si$_2$O$_7$) nachgewiesen werden können.

Aufschlußreich ist die Analyse der schwarzen Verunreinigungen vor und nach der erfindungsgemäßen Behandlung.

Isoliert man die Verunreinigungen aus der Rohschlacke vor der erfindungsgemäßen Behandlung, so konnten hier die folgenden Analysenwerte bestimmt werden:

| | |
|---|---|
| Glühverlust bei 1.000°C | 32,9 Gew.-% |
| SiO$_2$ | 28,0 Gew.-% |
| CaO | 25,4 Gew.-% |
| Fe$_2$O$_3$ | 2,9 Gew.-% |
| FeP bzw. Fe$_2$P | 1,1 Gew.-% |

Es handelt sich bei dieser Verunreinigung um mit Phosphorschlacke infiltrierten Koks. Durch die erfindungsgemäße Wasserdampfbehandlung bei beispielsweise 850°C entsteht ein weißes geblähtes Produkt, in dem man unmagnetische schwarze Körner von dichter Struktur findet. Die Analyse dieser Verunreinigung ergab die folgenden Werte:

| | |
|---|---|
| Kein Glühverlust, sondern eine Gewichtszunahme von | 8,1 Gew.-% |
| CaO | 23,9 Gew.-% |
| Fe$_2$O$_3$ | 36,2 Gew.-% |

Werden die schwarzen Körner zerkleinert — beispielsweise auf eine Teilchengröße von 60 $\mu$ — so ist das Pulver dunkelrotbraun. Offenbar haben sich unter dem Einfluß des erfindungsgemäßen Verfahrens die Eisen-Phosphorverbindungen zersetzt, woraufhin sich das Eisen mit Calcium möglicherweise zu Calciumferriten umgesetzt hat.

In einer Ausführungsform der Erfindung ist es möglich, bei der zuvor geschilderten hydrothermalen Umwandlung des Phosphorschlackengranulats färbende Hilfsstoffe, insbesondere färbende Metalloxide bzw. deren Salze, zuzumischen. Das Stoffgemisch wird dann der geschilderten hydrothermalen Calcination unterworfen. Es entstehen in diesem Falle farbig geblähte poröse Produkte. Geeignete färbende Metalloxide bzw. deren Salze sind beispielsweise solche des Eisens, Chroms, Mangans, Nickels oder Kobalts. Geeignet sind Zusatzmengen von 0,5 bis 5 Gew.-%, bezogen auf das Phosphorschlackengranulat.

Die durch das erfindungsgemäße Verfahren aufbereiteten Materialien auf Calciumsilikatbasis sind hochwertige Ausgangsmaterialien für Anwendungsgebiete, in denen Kalkrohstoffe dieser Art benötigt werden. Insbesondere sind hier die Gebiete der keramischen Massen, der Glasuren, Emails und allgemein der Gläser bzw. Glasschmelzen zu nennen. Bei der erfindungsgemäßen Verwendung der mit Wasserdampf behandelten Phosphorschlacke entsteht ein weißer keramischer Scherben. Durch die kristalline Struktur des gebildeten Wollastonits sind bei dem Scherbenbildungsprozeß keine hohen Aktivierungsenergien erforderlich. Der Brand solcher keramischer Massen kann beispielsweise bei 950°C erfolgen. Die aus der Literatur hervorgehenden günstigen Eigenschaften wollastonitischer Massen treffen für den im erfindungsgemäßen Verfahren aus Phosphorschlacke hergestellten Wollastonit zu.

Wie man Glasuren, Emails und Gläser mit natürlichem Wollastonit herstellen kann, so ist es möglich, den im erfindungsgemäßen Verfahren aus Phosphorschlacke hergestellten Wollastonit an dessen Stelle zu setzen. Die Vorteile wollastonitischer Glasuren sind beispielsweise beschrieben von W. Lehnhäuser und J. Jäger "Wollastonit in Glasuren", Sprechsaal 93 (1960), Nr. 1, Seiten 1/2.

Insbesondere zur Herstellung weißer Glasuren und Gläser kann erfindungsgemäß von der zuvor geschilderten Möglichkeit Gebrauch gemacht werden, die dunkel gefärbten körnigen Verunreinigungen aus dem geblähten Material der Erfindung vor dessen Verwendung zu entfernen.

Ausgrund seiner bestimmten physikalischen Beschaffenheit kann das erfindungsgemäße Verfahrensprodukt aber auch auf anderen Anwendungsgebieten mit Vorteil eingesetzt werden. Hier handelt es sich insbesondere um die Herstellung von Baumaterialien, in denen die geblähte poröse Struktur des erfindungsgemäßen Produktes bei gleichzeitig verringerten Raumdichten mit Vorteil Verwendung finden kann. Es ist auf diese Weise möglich, die bisher praktisch als wertloses Abfallmaterial angesehene Phosphorschlacke in hochwertige Bauhilfsstoffe umzuwandeln. So ist beispielsweise ein erfindungsgemäß erhaltenes wollastonitisches Material mit einer Schüttdichte von etwa 0,35 bis 0,45 g/cm³ ein ausgezeichneter Isolierstoff, der bis 1.050°C verwendet werden kann. Als Wärmeisolationsmasse ist er im Gegensatz zu organischen Materialien als Industrieofen-Isolierstoff geeignet. Als Leichtbaustoff oder Zuschlagstoff für Wände, Platten, Steine und dgl. kann er mit entsprechenden Bindern verarbeitet werden.

Ein weiteres Einsatzgebiet für die erfindungsgemäßen Verfahrensprodukte sind Landwirtschaft und Garten. Als Bodenlockerer haben sich bekanntlich heute Schaumkunststoffe — mit und ohne Düngestoff beladen — eingeführt. Das erfindungsgemäße Verfahrensprodukt kann hier mit Erfolg eingesetzt werden. Gegenüber den bekannten geschäumten Materialien auf Kunstoffbasis liegt der Vorteil für das erfindungsgemäß eingesetzte Material in der besseren Benetzung durch den Boden. Hierdurch wird das unerwünschte leichte "Wegfliegen" bei trockenen Böden verringert.

Das geblähte Calciumsilikatmaterial der Erfindung kann als solches oder auch mit Düngemitteln gefüllt eingesetzt werden. Dabei ist dem erfindungsgemäß hergestellten Wollastonit eine gewisse eigene Düngewirkung zu eigen. Es liefert insbesondere Calcium in beschränkten Mengen.

Beispiel 1

Gekörnte Phosphorrohschlacke aus der thermischen Phosphorgewinnung wird durch ein Sieb einer Maschenweite von 2 mm gesiebt. Das gesiebte Gut hat ein Schüttgewicht von 123 g/100 ml. Das Material zeigt grau-schwarzes Aussehen.

Bei den drei Verfahrenstemperaturen von 650°C, 750°C und 880°C werden jeweils zwei Versuche durchgeführt, und zwar jeweils einmal ohne Zusatz von Wasserdampf und zum anderen im erfindungsgemäßen Sinne unter Zuführung von Wasserdampf. Die Versuche werden dabei in einem von außen beheizten Drehrohr vorgenommen. Die Durchgangszeit der jeweiligen Materialprobe (77 g) durch das Drehrohr beträgt 17 Minuten. Das Drehrohr wird mit einer Umdrehungsgeschwindigkeit von 12 UpM gedreht. Die in den Versuchen gemäß der Erfindung (2, 4 und 6) jeweils eingesetzte Wassermenge betragt 20 g. In der folgenden Tabelle sind die Schüttgewichte der entstehenden Verfahrensprodukte angegeben und das Aussehen der Verfahrensprodukte beschrieben.

Tabelle

| Versuch-Nr. | Temp. °C | $H_2O$-Verdampfung in g | Schüttge-wicht in g/100 ml | Aussehen |
|---|---|---|---|---|
| 1 | 650 | — | 118,— | wie Original in d. Anliefe-rung grau-schwarz |
| 2 | 650 | 20,— | 114,— | grau-schwarz von weißen Partikeln durchsetzt |
| 3 | 750 | — | 121,— | verdichtet, Oberfläche angefrittet, grau-weiß |
| 4 | 750 | 20,— | 79,— | gebläht ($H_2S$-Geruch) weiß-graue Farbe |
| 5 | 880 | — | 78,— | leicht gebläht grau-weiße Farbe |
| 6 | 880 | 20,— | 34,— | weiß, stark gebläht, Partikel lassen sich zerdrücken. |

## Beispiel 2

Es wurde die folgende Wandfliesenmasse hergestellt:

50% der erfindungsgemäß behandelten Phosphorschlacke
10% plastischer Ton ($Al_2O_3$: 32%)     spez. Oberfl. 46,0 m²/g
40% quarzreicher Ton ($Al_2O_3$: 13%)     „          „    13,0 m²g

Die Komponenten wurden naß vermahlen, getrocknet und nochmals zerkleinert und mit 7,5% Wasser angefeuchtet. Die gepreßte und bei 950°C gebrannte Fliese zeigt die in der folgenden Tabelle angegebenen Kennwerte.

Zum Vergleich ist eine derzeit übliche Wandfliesenmasse gegenübergestellt:

| | Versuchsmasse Nr. 1723/950°C | Übliche Steingut-Wandfliesenmasse 1140°C |
|---|---|---|
| Schwindung | 0,5% | 0,5% |
| WA (24h) | 18,9% | 13,4% |
| DE (Druckerweichung) | 1140°C | ca. 1280°C |
| FD (Quellung Faktor 3 (2 atü × 1$^h$) | 0,015% | 0,02% |
| Ak. (Grd.$^{-1}$) 20—220°C | 69,2 · $10^{-7}$ | |
| 20—400°C | 72,1 · $10^{-7}$ | ca. 82—85 · $10^{-7}$ |
| 20—580°C | 82,9 · $10^{-7}$ | |

## Beispiel 3

20 g geblähter Wollastonit gemäß der Erfindung wurden eine Woche in 100 ml Leitungswasser des Stadtnetzes Bonn bei Zimmertemperatur stehen gelassen. Unter Abzug des Calciumgehaltes des Wassers waren 0,78 mg/l $Ca^{2+}$ in Lösung gegangen. Hieraus wird die Verwertbarkeit des erfindungsgemäßen Materials in Gartenbau und Landwirtschaft ersichtlich.

## Patentansprüche

1 Verfahren zur raffinierenden Aufbereitung der bei der thermischen Phosphorgewinnung aus Phosphaten anfallenden silikatischen Schlackenphase, dadurch gekennzeichnet, daß man die Schlacke als feinkörnigen Feststoff bei Temperaturen über 600°C, jedoch unterhalb der Erweichungstemperatur mit Wasserdampf behandelt.

2. Verfahren nach Anspruch 1, dadurch gekennzeichnet, daß man die Behandlung bei Temperaturen im Bereich von 650 bis 1.000°C, insbesondere bei 750° bis 900°C, durchführt.

3. Verfahren nach Anspruch 1 und 2, dadurch gekennzeichnet, daß man die Rohschlacke in ein geblähtes Produkt mit Schüttdichten $<1$ g/cm$^3$, vorzugsweise $<0.7$ g/cm$^3$ und gewünschtenfalls $<0,5$ g/cm$^3$ umwandelt.

4. Verfahren nach Anspruch 1 bis 3, dadurch gekennzeichnet, daß man die Rohschlacke als feinkörniges Gut bei Verfahrenstemperatur umwälzt und dabei mit strömendem Wasserdampf behandelt, wobei insbesondere in einem mit Wasserdampf durchströmten Drehrohr oder Schachtofen gearbeitet wird.

5. Verfahren nach Anspruch 1 bis 4, dadurch gekennzeichnet, daß man die Behandlung bis zur praktisch vollständigen Entfernung des in der Rohschlacke vorliegenden Ferrophosphors vornimmt.

6. Verfahren nach Anspruch 1 bis 5, dadurch gekennzeichnet, daß man das Produkt der hydrothermalen Behandlung einer physikalischen Nachreinigung unterwirft und hierbei dunkel gefärbte körnige, insbesondere Eisen enthaltende Verunreinigungen abtrennt.

7. Verfahren nach Anspruch 1 bis 6, dadurch gekennzeichnet, daß man der Phosphorschlacke färbende Hilfsstoffe, insbesondere färbende Metalloxide und/oder deren Salze zusetzt.

8. Verwendung einer durch hydrothermale Raffination nach einem der Ansprüche 1—7 aufbereiteten silikatischen Phosphorofenschlacke als Kalkrohstoff in keramischen Massen, Glasuren, Emails, Gläsern, Baustoffen, hydraulischen Bindemitteln, Isoliermaterialien oder zur Bodenverbesserung.

9. Verwendung nach Anspruch 8, dadurch gekennzeichnet, daß ein geblähtes Material mit Schüttdichten $<1$ g/cm$^3$ eingesetzt wird, das auch zur Herstellung von Isolierleichtbaustoffen verwendet werden kann.

## Revendications

1. Procédé pour le traitement affinant de la phase de scories silicatées se formant au cours de la préparation thermique du phosphore à partir de phosphates, caractérisé en ce que l'on traite les scories sous forme de solides à grains fins par de la vapeur d'eau à des températures supérieures à 600°C mais en dessous de la température de ramollissement.

2. Procédé selon la revendication 1, caractérisé en ce que l'on effectue le traitement à des températures dans le domaine de 650 à 1000°C, en particulier entre 750 et 900°C.

3. Procédé selon l'une des revendications 1 ou 2, caractérisé en ce que l'on transforme les scories brutes en un produit gonflé ayant des densités apparentes $<1$ g/cm3, de préférence $<0,7$ g/cm3 et au besoin $<0,5$ g/cm3.

4. Procédé selon l'une quelconque des revendications 1 à 3, caractérisé en ce que l'on fait tourner les scories brutes sous forme de produit à grains fins à la température du procédé et on les traite ainsi avec un courant de vapeur d'eau, auquel cas on opère en particulier dans un tube rotatif ou dans un four à cuve traversés par de la vapeur d'eau.

5. Procédé selon l'une quelconque des revendications 1 à 4, caractérisé en ce que l'on effectue le traitement jusqu'à élimination pratiquement totale du ferrophosphore présent dans les scories brutes.

6. Procédé selon l'une quelconque des revendications 1 à 5, caractérisé en ce que l'on soumet le produit issu du traitement hydrothermique à une post-purification physique et que l'on sépare dans ce cas des impuretés en grains foncées contenant en particulier du fer.

7. Procédé selon l'une quelconque des revendications 1 à 6, caractérisé en ce que l'on incorpore aux scories de phosphore des additifs colorants, en particulier des oxydes métalliques et/ou leurs sels colorants.

8. Application de scories de four à phosphore silicatées obtenues par affinage hydrothermique selon l'une quelconque des revendications 1 à 7 à titre de matière première calcique dans des masses céramiques, des glaçures, des émaux, des verres der matériaux de construction, des liants hydrauliques, des matières isolantes, ou pour l'amélioration du sol.

9. Application selon la revendication 8, caractérisé en ce qu'on met en oeuvre une matière gonflée avec des densités apparentes $<1$ g/cm3 pouvant également être utilisées pour la fabrication de matériaux de construction légers isolants.

## Claims

1. A process for the refining treatment of the silicate-containing slag which accumulates during the thermal recovery of phosphorus from phosphates, characterised in that the slag is treated with steam in the form of a fine-grained solid at temperatures above 600°C, but below the softening temperature.

2. A process as claimed in Claim 1, characterised in that the treatment is carried out at temperatures in the range from 650 to 1000°C and more particularly at temperatures in the range from 750 to 900°C.

3. A process as claimed in Claims 1 and 2, characterised in that the crude slag is converted into an expanded product having bulk densities of less than 1 g/cc, preferably less than 0.7 g/cc and, if desired, less than 0.5 g/cc.

4. A process as claimed in Claims 1 to 3, characterised in that the crude slag is circulated in the form of fine-grained material at the process temperature and at the same time is treated with flowing steam, the operation being carried out in particular in a rotating tube or shaft furnace through which steam flow.

5. A process as claimed in Claims 1 to 4, characterised in that the treatment is continued until the ferrophosphorus present in the crude slag has been almost completely removed.

6. A process as claimed in Claims 1 to 5, characterised in that the product of the hydrothermal treatment is subjected to physical purification to remove dark-coloured, particulate, particularly iron-containing impurities.

7. A process as claimed in Claims 1 to 6, characterised in that auxiliaries with a coloring effect, particularly coloring metal oxides and/or their salts, are added to the phosphorus slag.

8. The use of the silicate-containing phosphorus furnace slag prepared by hydrothermal refining in accordance with Claims 1 to 7 as a lime raw material in ceramic compositions, glazes, enamels, glasses, building materials, hydraulic binders, insulating materials or for soil improvements.

9. The use claimed in Claim 8, characterised in that an expanded material having bulk densities of less than 1 g/cc is used which may also be used for the production of lightweight insulation construction materials.